Europäisches Patentamt

European Patent Office

Office européen des brevets

(11) Publication number: **0 026 637**
**A2**

# (12) EUROPEAN PATENT APPLICATION

(21) Application number: **80303355.4**

(22) Date of filing: **24.09.80**

(51) Int. Cl.³: **G 01 C 11/00**

(30) Priority: **24.09.79 US 78358**

(43) Date of publication of application:
**08.04.81 Bulletin 81/14**

(84) Designated Contracting States:
**AT CH DE FR GB IT LI NL SE**

(71) Applicant: **THE UNITED STATES OF AMERICA**
represented by the Secretary U.S. Department of
Commerce
**National Technical Information Service Office of
Government Inventions and Patents 5285 Port Royal
Road**
**Springfield, Virginia 22161(US)**

(72) Inventor: **Colvocoresses, Alden Partridge**
**3316 Rocky Mount Road**
**Fairfax Virginia 22031(US)**

(74) Representative: **Butler, Michael John et al,**
**FRANK B. DEHN & CO. Imperial House, 15-19 Kingsway**
**London, WC2B 6UZ(GB)**

(54) Method and apparatus for acquiring topographical data of a celestial body.

(57) In a system for automatically mapping the surface of a celestial body (3), such as the earth, a relatively stable satellite is placed into a near polar, sun-synchronous orbit about the body. The satellite includes three solid-state linear sensing photo-detector sets (7, 9, 11) mounted transversely to the satellite heading (5). Two sets (7, 11) are oriented at the same acute angle to the geometric vertical but one (7) is aimed forward and the other (11) aft along the apparent track of the satellite with respect to the body. The other, (9) is oriented downward toward the geometric vertical with respect to the body. Two of the three sets are used in a given time period to sense the surface of the body with the satellite velocity providing a continuously imaging mode. In areas of rugged terrain, one of the angled sets (7 or 11) and the vertical set (9) are used to sense or image elements (27) of linear strips of the body disposed parallel to the apparent path of the satellite with respect to the surface of the body. For areas of relatively flat terrain the fore and aft sets (7 and 11) are used to image the body. In either case, data is acquired by sensing elements (27) of strips from a first position in space with a first set (7), and then when the satellite has moved to a second position, imaging the same elements (27) of each strip with a second set (9 or 11). The first and second satellite positions and the incremental element (27) on the ground define an epipolar plane. Sensing of the strip by the first set produces a first one-dimensional flow of data. Sensing of the strip by the second set produces a second one-dimensional flow of data which, when correlated with the data from the first set, results in data representative of elevational information for each element of each strip. The data from the sets may be in either panchromatic (single band) or multispectral (mult-band) mode. The system allows near real-time mapping of a surface since the imaged areas being compared are included in an epipolar plane, thus making data correlation for topographic information a matter of comparing the two one-dimensional records of the body's surface.

./...

Fig. 3

- 1 -

"Method and apparatus for acquiring topographical data of a celestial body"

This invention relates to a method and apparatus for acquiring topographical data of a celestial body. The invention is particularly concerned with the field of automated mapping systems for automatically acquiring topographic and optionally planimetric data of a celestial body in near real time.

Many techniques have been devised for mapping the surface of a celestial body, such as the earth, to provide both planimetric (two-dimensional) and topographic (elevation) information. Prior to the advent of orbiting space satellites, most such data acquisition and mapping was done by aircraft which carried photographic cameras suitable for obtaining stereoscopic coverages. Such techniques are still useful for providing high resolution stereoscopic views of relatively small areas of the surface, but such techniques are limited in that they involve an enormous amount of time and funds to map large areas of the earth. In addition, in order to produce maps containing elevational information from the stereo photogtaphs, each such stereo pair must be precisely oriented and calibrated using complex normally hand-driven stereoplotter apparatus. The resultant map is at least in part, commonly drawn by hand with the topographic contours being added by compilation from the model created by the stereo photographs.

Satellite imaging systems have been used for the past ten years for recording in an orthographic (two-dimensional) mode surface features of the earth. Such satellites as Landsats 1, 2, and 3 are characterized in having near polar, sun-synchronous circular orbits which allow continuous mapping of the entire earth's surface (excluding a small portion of the polar and cloud covered areas) in approximately eighteen days. Landsats and their Apollo predecessors have successfully used conventional photographic, Vidicon, and mechanical scanner-type imaging systems to record planimetric and radiometric data of the imaged area below the path of the moving satellite. However, none of the currently available earth imaging satellites has the ability to properly resolve the third dimension in a continuous mode suitable for automated processing.

With conventional photographic systems, a great deal of the total cost and time arises in the image data processing. Even with Landsat, which is a digital system, data processing is the principal item of concern. Currently, U. S. based processing facilities are limited to processing approximately 100 Landsat orthographic images (185 km by 160 km; 79 m by 79 m pixel) per day. It can thus be appreciated that stereoscopic imaging of the earth, using conventional imaging wherein two distance separated images are made would impose an even greater burden on present processing facilities since not only would each image have to be geometrically and radiometrically corrected, but each stereoscopic pair of images would have to be correlated and digitized point by point to derive topographic data therefrom.

In order to overcome some of the difficulties of stereographic mapping techniques, it has been proposed (Katz, Height Measurements with the Stereoscopic Continuous Strip Camera, Photogrammetric Engineering, Vol. 18, No. 1 March 1952, pp. 53-62) that height measurements could be made with an airborne stereoscopic continuous-strip type camera. It has also recently been proposed that conventional stereo image pairs can be scanned using epipolar-scan principles, thus reducing the image correlation (for elevational information) from a two- to a one-dimensional task. (Helava and Chapelle, Epipolar Scan Correction, Bendix Technical Journal, Spring, 1972, pp. 19-23). Epipolar scanning refers to a pair of scan lines in a plane which contains the air base of a stereo pair of images. It may also be applied to scan lines in a plane involving two satellite positions from which the earth is viewed and is referred to herein as the epipolar plane concept.

Apparatus has also been developed for automatically scanning stereo photo pairs using epipolar scanning and one-dimensional digital image correlation (Scarano and Brumm, A Digital Elevation Data Collecting System, Photogrammetric Engineering and Remote Sensing, Vol. 42, No. 4, April 1976, pp. 489-496). Thus, the concept of reducing photogrammetric data from two- to one-dimensional is well established, but the prior art does not describe the possibility of imaging the earth directly in stereoscopic digital form suitable for one-dimensional processing utilizing the epipolar plane concept.

Recent developments in solid state imaging detector technology have produced linear solid state photodetector array sets capable of imaging upwards of 20,000 separate picture elements (pixels) along the face of the array. Such arrays have desirable properties such as low power use, multi-spectral capabilities, low weight, and no moving parts which is a definite advantage in the satellite environment where rotational stability of this type of mapping satellite considered should be in the order of $10^{-6}$ degrees per second for optimum results.

Viewed from one aspect, the invention provides a method of acquiring topographical data of a celestial body using a platform spaced apart from said body and moving relative thereto, said platform including a linear set of sensing elements extending transversely with respect to the direction of motion of the platform, wherein respective sensing elements of said set continuously sense successive elements of respective strips of a swath on said body in a direction parallel to the direction of motion of said platform from successive positions of said platform along its path to produce a series of signal element flows, wherein said platform includes a second linear set of sensing elements extending transversely with respect to the direction of motion of the platform and inclined with respect to the first set, wherein respective sensing elements of said second set in respective epipolar planes continuously sense the successive elements of the respective strips from a different angle to that of the respective sensing elements of said first set from successive second positions of said platform along its path to produce a second series of signal flows, and wherein signal elements of said first flows are compared with signal elements of said second flows corresponding to the same respective epipolar planes to derive output signals indicative of elevational information for each element of the strips.

Viewed from another aspect, the invention provides apparatus for acquiring topographical data of a celestial body, comprising a platform adapted to be spaced apart from said body and to move relative thereto, said platform having mounted thereon a linear set of sensing elements extending transversely with respect to the intended direction of motion of the platform, respective sensing elements of said set being adapted in use continuously to sense successive elements of respective strips of a swath on said body in a direction parallel to the direction of motion of said platform, and means to produce a series of signal element flows from said sensing elements in accordance with successive positions of said platform along its path, wherein a second linear set of sensing elements is mounted on said platform extending transversely with respect to the intended direction of motion of the platform and is inclined with respect to said first set, wherein respective sensing element of the second set are adapted in use continuously to sense the successive elements of the respective strips from a different angle and from different successive platform positions to those for the first set, wherein means are provided to produce a second series of signal element flows from said second set of sensing elements, respective sensing elements of said first and second set being maintained in respective epipolar planes, and wherein means are provided to compare the respective signal elements of said first and second series of flows corresponding to the same respective epipolar planes and to derive output signals indicative of elevational information for each element of the strips sensed in use of the apparatus.

In a preferred embodiment the platform, which should be relatively stable, is in the form of an orbiting satellite preferably in a sun-synchronous, near polar, circular orbit. A set of sensing elements consists of several thousand detectors each of which generates a discrete signal flow or stream based on the radiometric response which is reflected solar plus emitted energy in or near the visible wave lengths. The number of detectors coupled with the optical system employed determines the resolution of the imaging system. The sets are mounted in the focal plane of the optical systems. If required each set consists of a single linear array for each system of optics thus providing a single (panchromatic) response. However, at least one set can comprise two or more arrays placed in the focal plane of its system of optics, thus providing for multispectral response. A minimum of two, but preferably three, sets are utilized. With two sets, one may be oriented vertically, with the other at an acute angle fore or aft. Alternatively both sets may be inclined to the vertical, but one fore and one aft. With three sets, one set is oriented vertically with the others oriented at the same acutes angles but fore and aft along the satellite track. The linear sets are oriented transversely to the satellite heading. It is anticipated that where three sets are involved, only two are activated at any given time.

As the platform, i.e. satellite moves across the body each detector of each set generates a flow of data in a path generally parallel to the satellite path. There is provided a continuous imaging mode, which is often referred to as the "push-broom" concept. Two detectors located on differently oriented sets thus image the same finite area of the body but at different times and from different aspect angles. To achieve the epipolar plane condition the image data generated by a specific detector of the first set to image the body must correspond to the data generated by a specific detector of the second set to image the body. The two sets of data cover the same along-track strip on the body.

By image correlation (which can be automated) the differences in apparent positions of various definable points on the body represent differences in elevation. This is the fundamental principle of stereo photogrammetry which need no further disclosure here. The whole concept depends on precise positional and attitude information of the satellite with respect to the body. In the case of the earth, the satellite position must be known to within 30 meters of its true position with respect to the geometric centre of the earth and the satellite (sensor) attitude must be known to within 10 arc seconds, again with reference to the geometric centre of the earth. Such positioning is within the current state-of-the-art with respect to space technology.

Each detector on each set generates a unique continuous flow of data which is either transmitted directly to earth or stored on tape for later transmission. In either case, the data can be transformed into digital form in which each discrete picture element (pixel) can be identified and reconstructed into image form. This technology is also well established.

One key element is maintaining the epipolar plane condition so that the data from the same two detectors on different sets, using different optics, follow the same path on the body. This is complicated by the rotation of the body with respect to the satellite motion. In the case where one vertical and one tilted set are used, e.g. for areas of rugged terrain, the rotational effect of a body such as the earth can be compensated by introducing an appropriate amount of yaw (rotation about the vertical axis) in the satellite. In the case where the two tilted sets are used, e.g. for areas of relatively flat terrain, both yaw and roll (rotation about the heading axis) must be introduced. For the earth case, formulae for compiling these rotational rates for a Landsat type of orbit have been derived and such can be derived for any other orbit and/or body which has defined motions. Once the stereo data is acquired under the defined epipolar plane conditions, it can be converted into both two and three dimensional map products using the automated technique described in the Scarano and Brumm article, supra.

It should be noted that each pair of detectors on different sets define their own epipolar plane. Thus, if there are 10,000 detectors in each set, 10,000 epipolar planes are created. This still retains the one-dimensional data processing concept since all the data is generated in the same along-track direction. The cross-track dimension is defined by the detector elements themselves which are fixed in place. The accuracy of such resulting map products depends on whether identifiable ground points of known position (control points) are or are not utilized. When an appropriate number of control points are used, the accuracy·should be at least three times better than when no control points are used. In the case of the earth, there is a generally adequate distribution of control points to permit mapping at the higher accuracy. The utilization of ctonrol point as well as all other aspects of the above process lend themselves to automation.

The scale of the final map product depends largely on the resolution of the system (pixel size) which in turn is governed by the available data rates. In the earth case, there are 13 Landsat receiving station stations built or being built all of which can receive up to 15 megabits per second. If such a criteria is used in the earth case, the scale of the final map product is in the order of 1:50,000 or 1:100,000 scale and within National Map Accuracy Standards. These are map scales in general use throughout the world today.

Some embodiments of the invention will now be ?escribed by way of example and with reference to the accompanying diagrams, not to scale, in which:-

Figure 1 is a schematic perspective view of a satellite orbiting the earth in a sun-synchronous, near polar orbit showing how imagery can be cast on a cylindrical map projection;

Figure 2 is a perspective view (not to scale) of a solid state linear photodetector set imaging along-track strips of a surface of the earth;

Figure 3 is an elevational schematic view of one embodiment of the present invention showing the geometric relationship of the linear photodetector sets with respect to one another and to the surface of the earth;

Figure 3A is a plan view of Figure 3 showing the relationship of the linear sets relative to the direction of flight of the satellite;

Figure 4 is a schematic elevational view showing the geometric relationship between the satellite and linear sets between first and third imaging positions with respect to a sensed surface for one case;

Figure 5 is a geometrical representation of the relationship between the satellite in first and second imaging positions and the sensed surface of the earth, where the base to height ratio is equal to 1/2;

Figure 6 is a geometrical representation of the relationship between the satellite in first and third imaging positions with respect to the sensed surface of the earth, where the base to height ratio is equal to 1;

Figure 7 illustrates the apparent path of the satellite during ascending and descending modes as projected on the cylindrical mapping surface, shown in Figure 1;

Figure 8 shows a portion of the path on the rotating earth and shows an example of the yaw offset that must be introduced when first and second imaging positions are used and the base to height ratio is equal to 1/2;

Figure 9 shows a portion of the path on the rotating earth and shows an example of the yaw and roll offset that must be introduced when the first and third imaging positions are used and where the base to height ratio is equal to 1;

Figure 9A is an elevation drawing which illustrates the roll offset that must be introduced when first and third imaging positions are used and the base to height ratio is equal to 1; and

Figure 10 illustrates the basic geometric relationship by which elevation differences are determined through the stereoscopic mode.

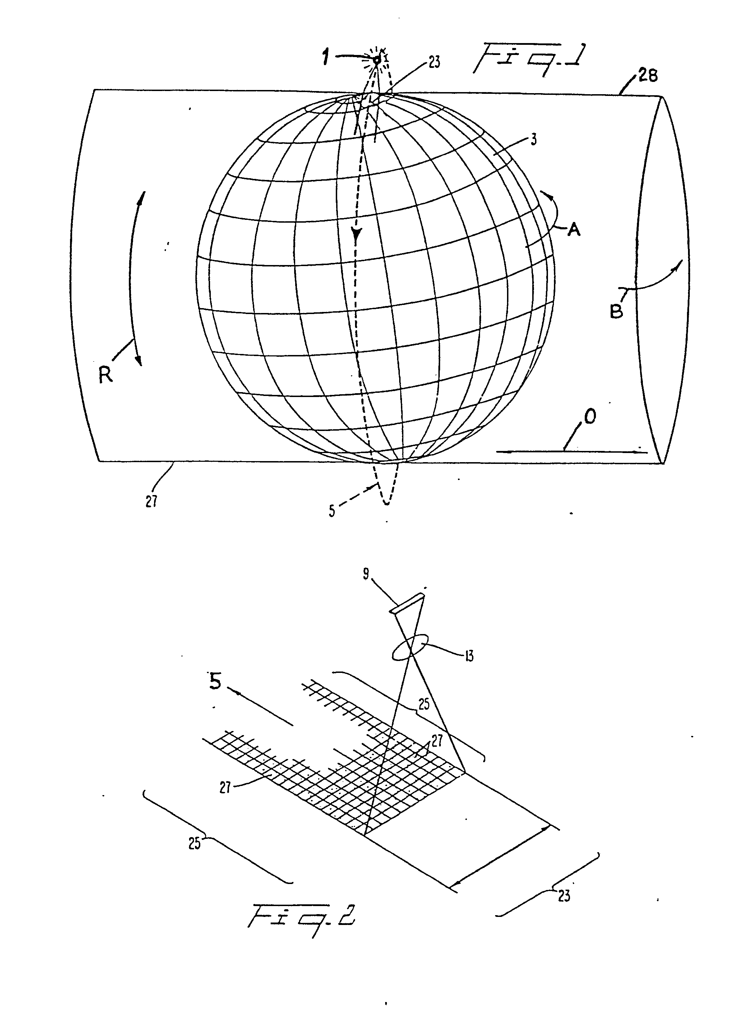

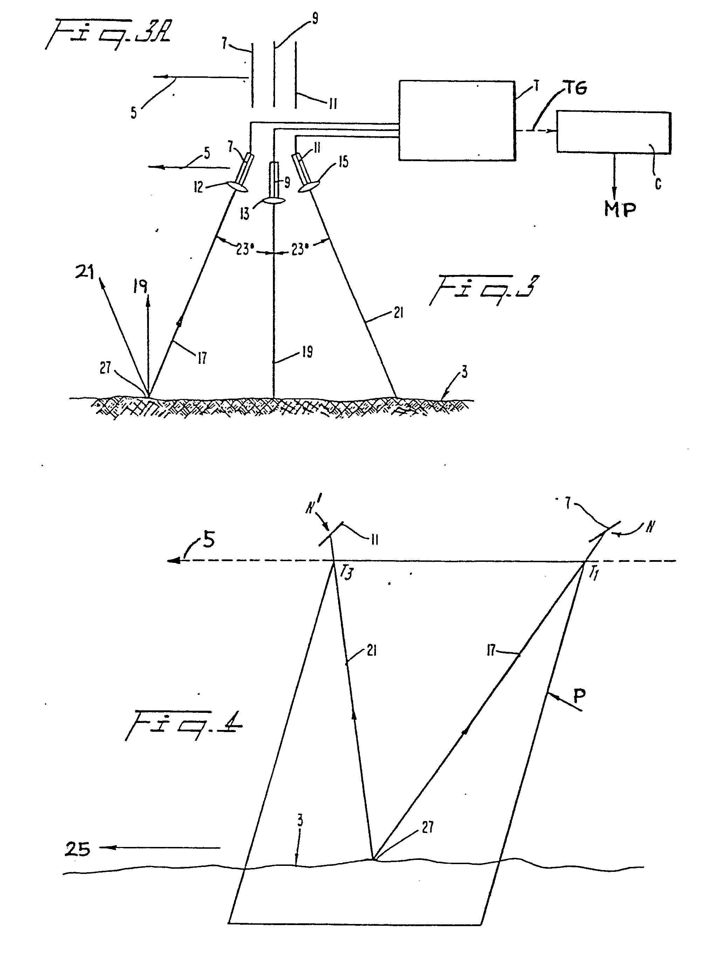

With reference to Figure 1, a satellite 1 is shown in orbit around a rotating celestial body 3, in this case the earth. The direction of rotation of the earth, and the direction of orbit precession are marked by arrows A and B respectively. The satellite is placed in a sun-sychronous, near polar circular orbit about the rotating body. In the present case, where the satellite 1 is used to sense the earth, it is placed into an orbit inclined at approximately 9 degrees from the earth's poles. In order to provide a sun-synchronous orbit, the mean height about the earth's surface is maintained at approximately 919 kilometers which allows full coverage of the earth's surface (except for small areas near the poles) in 18 days. Satellite 1 follows a path 5 indicated by dashed lines in Figure 1.

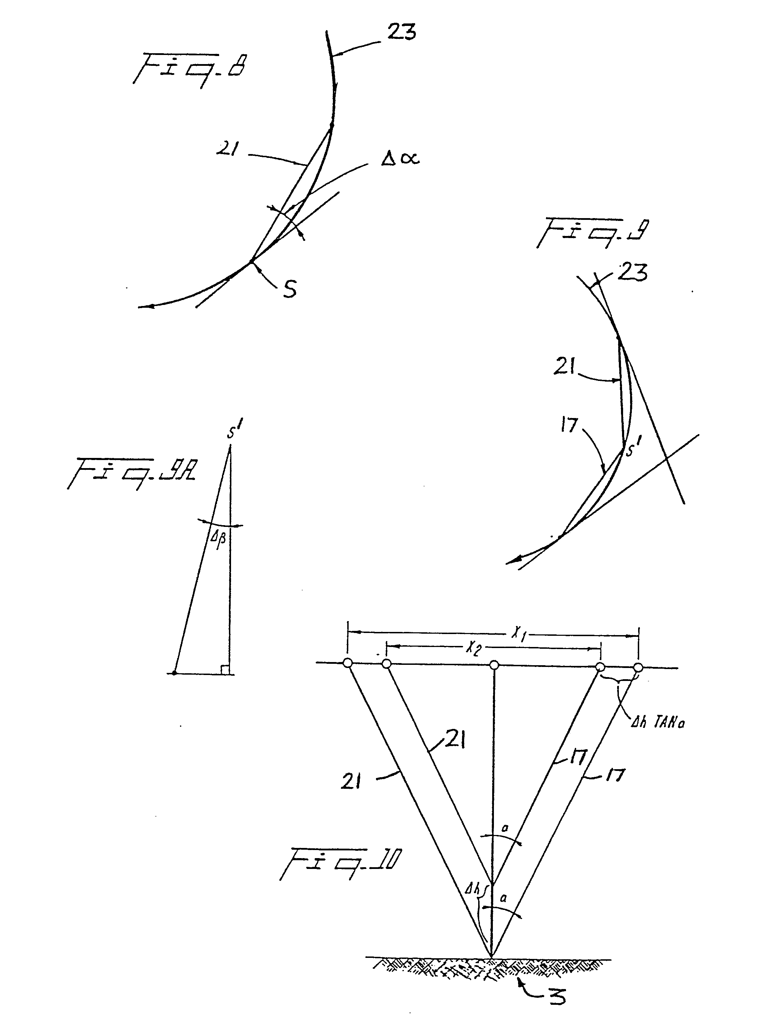

Satellite 1 includes three linear sets of sensing elements in the form of solid state photodetectors, the sets being indicated by numerals 7, 9 and 11. Each set has an associated system of optics, respectively 12, 13 and 15, and is in the respective focal plane thereof. As schematically shown in Figure 3, one detector set 9 is oriented with its optics 13 downwardly along geometric vertical with respect to the surface of the earth. Detector sets 7 and 11 are respectively oriented forward and aft with their respective optics 12, 15 along the track of the satellite. Detector sets 7 and 11 are arranged at acute angles with respect to detector set 9. In the
preferred embodiment illustrated, these acute angles
each have a value of $23^O$. The imaging optics can
vary in focal length between 30 centimeters to 1
meter, depending upon the resolution desired. Since
optics 12 and 15 image areas off the vertical, they
are of about 10% longer focal length to provide
resolution compatible with optics 13. As can be seen,
the photodetector sets 7, 9 and 11, image the surface
of the earth as indicated by lines 17, 19 and 21.

Interconnected through suitable leads with
the photodetector sets in the satellite is an
initial processor, transmitter and recorder unit T
which receives the output signals of the sets 7, 9 11.
Each received signal is indicative of spatial and
radiometric information for each element of each
linear set. The initial processor performs
transformations, data compaction and such other
manipulations as are necessary to put the data in a
form suitable for storage in the recorder of
transmission. The information is then stored in the
recorder or transmitted as indicated by dotted line
TG to earth where the individual signals are compared
and map products are formed by further processing by
means of a comparator/processor C, Figure 3. The
computer hardware and software involved can be
adapted from well-known techniques.

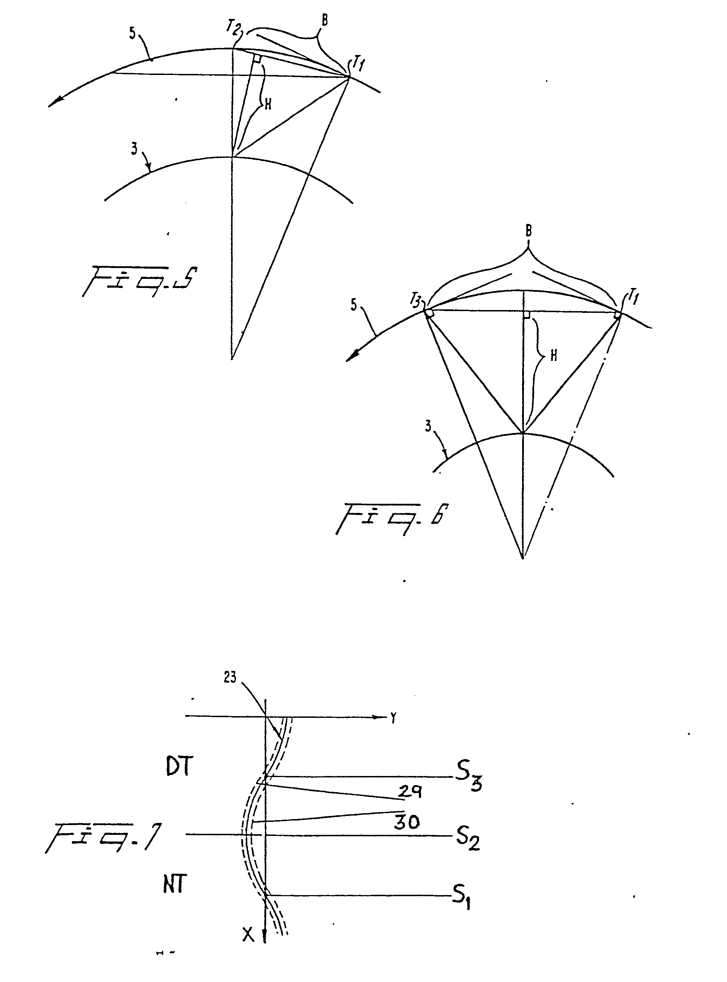

As satellite 1 travels along orbital path 5,
photodetector sets 7, 9 and 11 image a swath 23 of
surface 3 of the earth. Optics 12, 13 and 15 provide
a field of view of nearly $12^O$ to linear sets 7, 9 and
11. At the preferred orbital altitude of 919 kilometers,
this implies a swath width of approximately 175
kilometers. As shown in Figure 2, linear set 9, for example, images a number of alongtrack strips 25 of surface 3 of the earth within ground swath 23. Photodetector set 9 and sets 7 and 11, are oriented substantially transversely to the direction of motion 5 of satellite 1 (Figure 3A). Each linear strip 25 imaged within ground swath 23 is oriented substantially parallel to the direction of motion of the satellite with respect to the surface of the earth.

Any two of the sets of photodetectors (7, 9 and 11) provided stereoscopic coverage of the earth's surface. Photodetector sets 7, 9 and 11 can be of a type well known in the art and each can comprise one or more arrays, each formed as a single linear strip of discrete solid state photodetectors. Each photodetector is capable of continuously resolving picture elements (pixels) 27 along a strip 25, which is one picture element wide through the appropriate optics. Each linear array can range from 10 to 30 centimeters in length with upwards of 20,000 discrete photodetectors being included in each such linear array. When two or more arrays are used in the same set with associated optics, multispectral as well as stereoscopic coverage can be obtained. For general purpose earth viewing, which is the preferred embodiment, three band multispectral array sets are proposed with each set of arrays (7, 9 and 11) using the same three wavebands. The three bands are 0.47 to 0.57 micrometers (blue-green), 0.57 to 0.70 micrometers (green-red) and 0.76 to 1.05 micrometers (near-infrared). All three bands provide the same resolution which may vary from 10 to 30 meters at ground scale for each two-dimensional picture element 27. Since data rates would be excessive if all three multispectral detector array sets were operating at full resolution, selectivity and flexibility are introduced by which the resolution of any band can be reduced (or turned off). Thus, a wide variety of modes relative to wave band selection and resolution as well as monoscopic vs. stereoscopic coverage is possible. This is important for the earth case since different areas call for differences in spectral response, stereographic response and resolution. Moreover, the linear sets may be activated in part, resulting in only a portion of the width of thr ground swath 23 being imaged on any one satellite pass. In some areas and conditions stereoscopic coverage is not required in which case only set 9 will be activated, in either panchromatic or multispectral modes and for either a portion of or the full swath width. The technology for providing selectivity and flexibility is well established in the design and operation of linear array sets.

Each photodetector in a linear array set is capable of quantizing at least 64 radiometric levels. A 64-level quantization is normally adequate and this requires only a six bit (digital) signal, to be used to describe each such sensed picture element (pixel). Greater fineness of the quantized radiometric levels can be accomplished by using larger digital words to describe each quantized pixel. This leads to a design trade-off between radiometric quantization and data transmission rates.

Within the current state-of-the-art, with respect to platform stability, positioning and attitude determination, absolute imaging accuracies (independent of control) in the 50 to 100 meter error range are expected. Accuracies of 7 to 25 meters, which permit mapping at 1:50,000 scale with contours of 20 to 50 meters at U.S. National Map Accuracy Standards are achievable through suitable ground control.

Topographic (elevational) data is acquired by the use of two of the three linear sets 7, 9 and 11 at a given time to continuously sense linear strips 25 along the surface of the earth 3. In the case where both planimetric and topographic data are desired, the vertical set 9 is used with one of the angled sets 7 or 11 to sense strips within ground swath 23. The choice of whether set 7 or 11 is used in combination with set 9 depends upon the angle of the sun. Generally, aft-looking set 7 is used during the descending (daylight) mode north of the equator while the forward-looking set 11 is used south of the equator. In the case where maximum stereoscopic resolution of elevational differences of the surface is desired, the fore and aft array sets are used together to image the body.

An important aspect is maintaining the orientation of the linear sets with respect to the ground swath 23 imaged by the sets such that as shown in Figure 4, an individual detector N of a set at a first imaging position $T_1$ and a corresponding detector N' of another set at another imaging position $T_3$ along with the corresponding imaged element 27 of a strip 25 of ground swath 23 define an epipolar plane P. In Figure 4, sets 7 and 11 are used. The epipolar condition implies a plane defined by two points in space and one on the ground. The epipolar plane condition must continue while the satellite motion results in continuous imaging along swath 23. The epipolar plane, which is defined in inertial space, exists as long as the same two detectors from two sets cover the same ground traced along individual strips 25.

Figures 5 and 6 respectively define the conditions wherein the base-height ratio is 1/2 and 1. The base, B, is the distance between two satellite positions, $T_1$ and $T_2$ in Figure 5, and $T_1$ and $T_3$ in Figure 6, for imaging a particular point on the earth. The height is the length of the perpendicular from the line joining the two satellite positions to the imaged point. The base-height ratio of 1/2 is used in conjunction with vertically oriented set 9 and either the fore or aft array sets 7, 11 respectively, when it is desired to acquire both planimetric and stereoscopic topographic information over areas of moderate to steep relief. For flatter areas, the base-height ratio of 1, using only fore and aft sets 7 and 11, is appropriate. Of course, vertical set 9 can be used alone for planimetry and radiometry.

Because each set is looking at the earth at a different aspect angle, that is vertical and/or, forward or aft of the vertical, rotation of earth 3 causes a complication as regards the epipolar plane. This complication can be overcome by yawing and/or rolling the satellite a few minutes of arc so that the ray to a given detector N of one set at a given time $T_1$ and the ray to a corresponding detector of another set 9 or 11 at another time, $T_2$ or $T_3$, come from the same ground strip 25. Such an arrangement allows direct data correlation between data from the respective detectors for use in determining the elevation of a sensed area.

The rotational rate of the satellite is not perfect and thus the one-dimentionsional data flow for correlation purposes is of limited duration. Given state-of-the-art satellite stabilities on the order of $10^{-6}$ degrees per second, it is assumed that data from the detector N on array set 7 will drift from detector N' of array set 9 (or 11) to N' + 1 on these array sets, but several thousand kilometers of satellite travel are involved in all cases. This does not introduce a serious problem with respect to processing as the data from a small number of detectors can be easily handled in modern computers.

Other factors, such as the ellipsoidal shape of the earth, the slight ellipticity of the satellite orbit, and the differential earth rotational velocity as a function of latitude, must also be taken into account. Such factors, however, are known and can be compensated by appropriate programming of the data processing equipment and/or through direct control of the satellite itself. For the case in Figure 8 where one vertical and tilted set, e.g. set 11 in direction 21, is used, base-height ratio of 1/2, with the satellite at a point S, the epipolar plane condition ca be maintined by applying appropriate yaw offset $\triangle \alpha$ and to the satellite which varies throughout orbit by e.g. $\pm 4^\circ$ from the nominal spacecraft heading along track 5. For the case case in Figures 9 and 9A, using two tilted array sets, base-height ratio of 1, with the satellite at point S', a slight roll offset $\triangle \beta$ of up to $0.1^\circ$ (or approximately 7 minutes of arc) as compared to local vertical must be introduced in addition to yaw to keep the epipolar plane condition with the corresponding elements of each linear set recording the same ground trace, the roll offset varying throughout the orbit. Fomulae which define the yaw and roll functions have been developed for the earth case.

An additional advantage arising from the use of continuous strip sensing along an epipolar plane is that data processing requirements for correlating two sets of signals to produce topographic data of an along-track strip 25 is relatively simple. Since each strip is represented by two separate one-dimensional flows of digital signals, these signals can be correlated with one another, element by element to produce output signals representative of the relative height or elevation of each incremental area.

The combination of epipolar scanning of linear stips of the surface of a celestial body along with solid state linear photodetector sets which output a one-dimentional stream of data allow mapping the surface of such a body to be performed continuously and in near real-time.

Satellite 1 should contain enough memory to store a 175 kilometer wide swath of 15 by 15 meter pixels (single band) at least for 5,000 kilometers swath length. It is anticipated that when satellite 1 is within range of a satellite ground control station, data acquired by satellite 1 is normally transmitted to the ground station immediately as it is acquired and then processed. In the event that satellite 1 is out of sight of such a ground station, or if conditions require, the onboard recorder stores the data for subsequent transmission. Where data in excess of a prescribed limit, such as 15 megabits per second is being acquired, part of the data can be stored while the other part is directly transmitted to the ground station. The stored data can be transmitted at another time to the same or a different receiving station.

Data acquired by satellite 1 can be processed by a variety of well-known-techniques to produce black and white or multicolor images substantially free of geometric distortions and radiometric anomalies. The digital signals are processed and calibrated both radiometrically and geometrically to a defined map projection, such as the Space Oblique Mercator, descibed in Photogrammetric Engineering, pages 921-926 (1974). In this article, a two-dimensional mapping technique is described for use with a satellite. Thus, as shown in Figure 1, the projection surface of the map is a cylinder 28 disposed tangentially to the earth and oblique to the polar axis. Cylindrical surface 27 is oscillated along its axis in the direction of arrows O at a compensating rate which varies with satellite latitude. The cylinder rotates in the direction of arrows R about the imaging point of the orbital track.

Figure 7 shows how an image acquired by satellite 1 is cast on the developed projection surface 27 of Figure 1. Thus there is shown the swath 23, with its limits of image 29 and 30, with regard to local vertical. $S_1$ represents the Equator for an ascending node, $S_2$ represents an antinode at South $81°$ latitude, and $S_3$ represents the Equator for a descending node. The origin of the Y axis is North $81°$. Region NT is nighttime and Region DT daytime.

Figure 10 illustrates the basic state of the art geometry by which elevation (height) is determined stereoscopically. Thus, considering image lines 17 and 21 at constant angles $a$ to the vertical, `p is the path difference, or parallax, between X the distance between two points at which ground level is imaged, and $X_2$, the distance between two points at which an elevation $\Delta h$ above ground level is imaged. By simple geometry:-

$$\Delta h = \frac{\Delta p}{2 \text{ Tan } a} (SF)$$

where SF is a suitable scale factor.

The system of the embodiments described allows data acquisition and mapping of the surface of the earth to be done in a variety of user-selectable modes. Panchromatic stereoscopic imaging can be done at maximum resolution for a portion, such as half, of the swath width at either base-height ratio, or at reduced resolution of the entire swath width at either base-height ratio. Alternatively, multispectral and stereoscopic imaging can be performed at maximum resolution over a portion of the swath width at either base-height ratio, or over the entire swath width at reduced resolution at either base-height ratio. Multispectral imaging can be performed by itself at maximum resolution over the entire swath width. For areas of relatively flat terrain the fore and aft sets 7 and 11 are used. For areas of rugged terrain the vertical set 9 and one of the angled sets are used.

It is understood that while the present embodiments have been described with respect to a satellite rotating about the earth, the method and apparatus of the present invention is adaptable for imaging of other celestial bodies.

Thus, there is provided in the preferred embodiments, an automated satellite mapping system which has high stability, a minimum of moving parts, and the ability to image the earth in both planimetric and topographic modes and in one or a variety of spectral bands. Such a satellite mapping system utilizes the epipolar plane concept to reduce data correlation for elevational information to one-dimensional processing in near real time. There is provided a method and apparatus for imaging the surface of the earth to provide high resolution, panchromatic or multispectral data of the earth. The planimetric and topographic data can be processed in near real time to produce visual images and a wide variety of planimetric, topographic and thematic map products.

CLAIMS

1. A method of acquiring topographical data of a celestial body (3) using a platform (1) spaced apart from said body and moving relative thereto, said platform including a linear set of sensing elements (7) extending transversely with respect to the direction of motion (5) of the platform, wherein respective sensing elements of said set (7) continuously sense successive elements (27) of respective strips (25) of a swath (23) on said body (3) in a direction parallel to the direction of motion (5) of said platform from successive positions ($T_1$) of said platform (1) along its·path to produce a series of signal element flows, characterised in that said platform includes a second linear set of sensing elements (9 or 11) extending transversely with resepct to the direction of motion (5) of the platform (1) and inclined with respect to the first set (7), in that respective sensing elements of said second set (9 or 11) in respective epipolar planes continuously sense the successive elements (27) of the respective strips (25) from a different angle to that of the respective sensing elements of said first set (7), from successive second positions ($T_2$ or $T_3$) of said platform (1) along its path to produce a second series of signal flows, and in that signal elements of said first flows are compared with signal elements of said second flows corresponding to the same respective epipolar planes to derive output signals indicative of elevational information for each element (27) of the strips (25).

2. A method as claimed in claim 1, characterised by the steps of yawing or yawing and rolling said platform (1) with respect to its direction of motion (5) to compensate for rotation of the body (3) with respect to the direction of motion (5) of the platform, whereby said linear sets continuously follow the strips (25) defined on said body (3) by the intersection of said epipolar planes with said body (3).

3. A mehtod as claimed in claim 1 or 2 <u>characterised in that</u> at least one of said sets of sensing elements (7, 9, 11) comprises a plurality of linear arrays which are used to provide multispectral sensing.

4. A method as claimed in claim 1, 2 or 3 <u>characterised in that</u> one of said sets of sensing elements (9) is used to sense in a direction along the geometrical vertical with respect to said body (3) and another of said sets of sensing elements is used to sense in a direction at an acute angle to said vertical, forward or aft along the swath (23) on said body (3).

5. A method as claimed in claim 4, <u>characterised in that</u> the distance B between the sensing position ($T_1$) for forward or aft sensing of an element (27) of a strip (25) of said swath (23), and the sensing position ($T_2$) for vertical sensing of the element (27), is related to the height H of the platform (1) above the body (3) by the formula:-   $\dfrac{B}{H} \simeq \dfrac{1}{2}$

6. A method as claimed in claim 1, 2 or 3 <u>characterised in that</u> one of said sets of sensing elements (7) is used to sense in a direction at an acute angle to the geometrical vertical with respect to said body (3), forward along the swath (23) on said body (3), and another of said sets of sensing elements (11) is used to sense in a direction at an acute angle to the geometrical vertical with respect to said body (3) aft along the swath (23) on said body (3).

7. A method as claimed in claim 6 <u>characterised in that</u> the distance B between the sensing position ($T_1$) for forward sensing of an element (27) of a strip (25) of said swath (23) and the sensing position ($T_3$) for aft sensing of the element, is related to the height H of the platform (1) above the body (3) by the formula:-

$$\frac{B}{H} \simeq 1$$

8. Apparatus for acquiring topographical data of a celstial body (3), comprising a platform (1) adapted to be spaced apart from said body and to move relative thereto, said platform (1) having mounted thereon a linear set of sensing elements (7) extending transversely with respect to the intended direction of motion of the platform, respective sensing elements of said set (7) being adapted in use continuously to sense successive elements (27) of respective strips (25) of a swath (23) on said body in a direction parallel to the direction of motion (5) of said platform, and means to produce a series of signal element flows from said sensing elements in accordance with successive positions ($T_1$) of said platform (1) along its path, <u>characterised in that</u> a second linear set of sensing elements (9 or 11) is mounted on said platform (1) extending transversely with respect to the intended direction of motion of the platform and is inclined with respect to said first set (7), whereby respective sensing elements of the second set (9 or 11) are adapted in use continuously to sense the successive elements (27) of the respective strips (25) from a different angle and from different successive platform positions ($T_2$ or $T_3$) to those for the first set (7), in that means are provided to produce a second series of signal element flows from said second set of sensing elements (9 or 11), respective sensing elements of said first and second sets (7; 9 or 11) being maintained in respective epipolar planes, and in that means are provided to compare the respective signal elements of said first and second series of flows corresponding to the same respective epipolar planes and to derive output signals indicative of elevational information for each element (27) of the strips (25) sensed in use of the apparatus.

9. Apparatus as claimed in claim 8, characterised in that a third linear set of sensing elements (11) is provided inclined with respect to both said first and second sets (7 and 9).

10. Apparatus as claimed in claim 9 characterised in that one of said linear sets (9) is arranged to sense along the geometrical vertical of the body (3) and the other linear sets (7 and 11) are inclined at respective forward and aft angles of 23° to said one set (9).

Fig.1

Fig.2

Fig.3A

Fig.3

MP

Fig.4

Fig. 5

Fig. 6

Fig. 7

0026637

Fig.8

Fig.9

Fig.9A

Fig.10